# EUROPEAN PATENT SPECIFICATION

(11) **EP 4 342 653 B1**
(45) Date of publication and mention of the grant of the patent: **12.02.2025**
(21) Application number: 23199156.3
(22) Date of filing: 22.09.2023
(51) Int. Cl.: B29C 45/14

(54) **AN IN MOULD LABELLING DEVICE**
IN-MOLD-ETIKETTIERVORRICHTUNG
DISPOSITIF D'ÉTIQUETAGE DANS UN MOULE

(30) Priority: 23.09.2022 NL 2033122
(43) Date of publication of application: 27.03.2024
(73) Proprietor: Gereedschappenfabriek Van den Brink B.V., 6732 BL Harskamp (NL)
(72) Inventor: VAN DE KIEFT, Jan Reinier, 6732 BL Harskamp (NL)
(74) Representative: V.O.

(56) References cited:
- EP-A1- 0 802 032
- GB-A- 1 357 531
- JP-A- 2007 062 060
- JP-A- 2012 076 430
- NL-C2- 1 020 248
- US-A- 4 784 593

## Description

The invention relates to an in mould labelling device according to the preamble of claim 1. Such an in mould labelling device is for example known from GB1357531A.

Another in mould labelling device is for example known from EP0802032. Herein an injection in mould labelling device is disclosed comprising a first mould half having a mould cavity onto which connects an injection nozzle for heated, plasticized plastic, in addition to a second mould half, which mould halves are movable toward and away from each other. The known device further comprises a mandrel of which the relevant outer surface has a shape corresponding with the shape of the inner surface of mould cavity. The mandrel is configured to hold a label and for that purpose the surface of mandrel is provided with suction lines which are connectable to a suction mouth for temporarily holding successive labels. The mandrel of the known device with a label sucked there against can be inserted into the mould cavity. As mentioned in EP0802032, for transferring the label from the mandrel to the inner surface of the mould cavity via an electric lead connected to a high-voltage supply of for instance 25 kV a voltage is applied to the surface of the mandrel when the mandrel is fully inserted into the mould cavity. An electrostatic charging of the plastic label thereby takes place, which label thereby undergoes an electrostatic attraction to the inner surface of the mould cavity as a result of which the label comes to lie against this inner surface of the mould cavity. Thereafter the mandrel can be removed from the mould cavity and the second mould half can be inserted into the mould cavity and the injection nozzle can inject heated, plasticized plastic therein. After sufficient cooling a thus formed product with the label is removed from the mould cavity after mould halves have first been moved apart. Although this known device can satisfactorily produce injection moulded products provided with labels it sometimes occurs that the label is not positioned or oriented correctly in the finished product.

It is an object of the present invention to provide an alternative in mould labelling device, and in particular it is an object of the present invention to provide an in mould labelling device in which the risk of a label not being provided correctly oriented in the finished product is reduced.

According to the invention at least one of the objects is obtained by providing an in mould labelling device according to claim 1. The invention is based on the insight that a reason why the label is not positioned or oriented correctly in the finished product when produced by the known in mould labelling device can be found in that in some cases the mandrel is not correctly centered in the mould cavity when it is fully inserted therein. By in accordance with the invention forming the mandrel of a hollow outer sleeve, an inner shaft centrally located within the outer sleeve and an elastic element positioned between the inner shaft and the outer sleeve, a self-centering mandrel is obtained as a result of which the risk of a label not being provided correctly oriented in the finished product is reduced. It is observed here that the hollow outer sleeve, the inner shaft and the elastic element can be formed as separate components that are assembled together to form the mandrel but that the hollow outer sleeve, the inner shaft and the elastic element can also be formed by 3D-printing as a single unit forming the mandrel.

Since the outer sleeve comprises a first abutment protruding radially inwards from an inner surface of the outer sleeve, the first abutment having a free end, wherein the inner shaft comprises a second abutment protruding radially outwards from an outer surface of the inner shaft, the second abutment having a free end, the first abutment being arranged to protrude towards the second abutment and such that the free end of the first abutment and the free end of the second abutment are positioned at a mutual distance in an unstressed position of the elastic element and such that the free end of the first abutment and the free end of the second abutment are in contact with each other in a stressed position of the elastic element, a label can be positioned on the outer surface of the outer sleeve correctly oriented when the free end of the first abutment and the free end of the second abutment are in contact with each other in a stressed position of the elastic element, since in this contact position the relative orientation of the first and second abutment, and thus the relative position of the outer sleeve and the inner shaft are fixed.

In an embodiment of an in mould labelling device according to the invention the mould cavity is provided with a bottom, wherein a head end of the outer sleeve is provided with at least three mutually spaced third abutments each having a free end and each projecting axially from the head end of the outer sleeve, and wherein the third abutments are arranged such that the free ends of the third abutments contact the bottom of the mould cavity when the mandrel is fully inserted into the mould cavity. In this manner the mandrel can be inserted into the mould cavity until the free ends of the third abutments contact the bottom of the mould cavity such that the axial position of the mandrel inside the mould cavity is correctly defined, resulting in the risk of a label not being provided correctly oriented in the finished product being further reduced.

The invention will be further explained with reference to the Figures, in which a non-limiting exemplary embodiment of according to the invention is shown:
Fig. 1 schematically shows an embodiment of an injection in mould labelling device according to the invention having a mandrel with a hollow outer sleeve, an inner shaft and an elastic element positioned between the inner shaft and the outer sleeve;
Fig. 2 schematically shows the mandrel as shown in Figure 1 in a position in which the elastic elements are unstressed; and
Fig. 3 schematically shows the mandrel as shown in Figure 1 in a position in which the elastic elements are stressed.

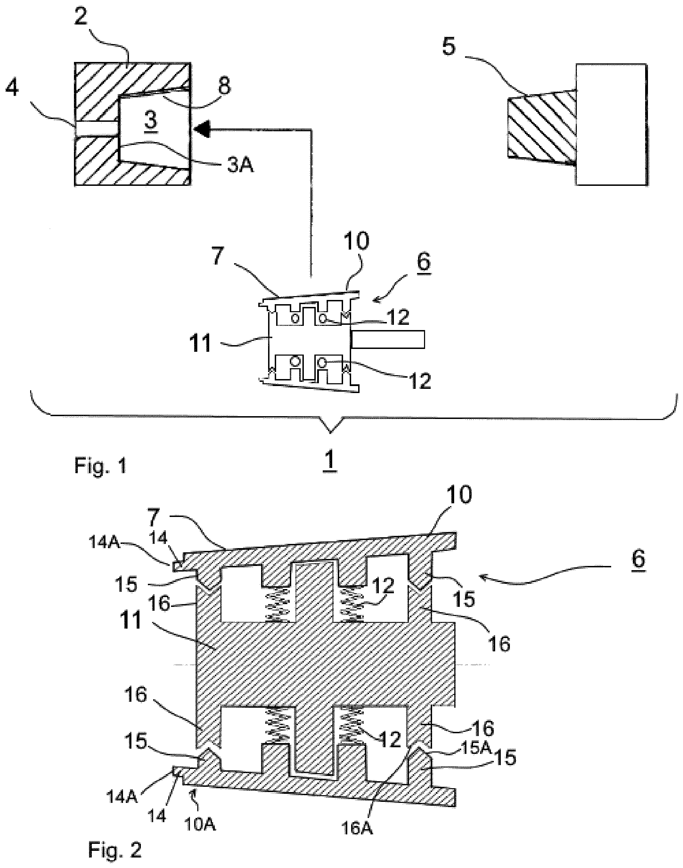

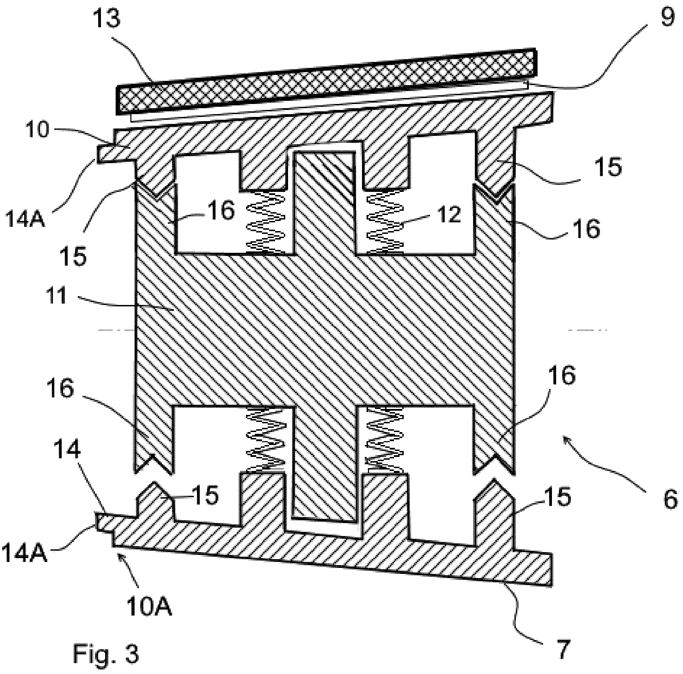

In Figure 1 an embodiment of an injection in mould labelling device 1 according to the invention is schematically shown in cross section. The in mould labelling device 1 comprises a first mould half 2 having a mould cavity 3 onto which connects an injection nozzle 4 for heated, plasticized plastic. The in mould labelling device 1 in addition comprises a second mould half 5, which mould halves 2, 5 are movable toward and away from each other. The in mould labelling device 1 further comprises a mandrel 6 of which the relevant outer surface 7 has a shape corresponding with the shape of the inner surface 8 of the mould cavity 3. The mandrel 6 is in a manner known per se, and therefor not further detailed here, configured to hold a label 9 (see Fig. 3) and for example the mandrel 6 can be provided with suction lines and with means for electrostatically charging the label, normally formed by plastics. The manner of operation of the injection in mould labelling device 1 is similar to the manner of operation of the in mould labelling device known from EP0802032 and therefor is not further elucidated here. Below the difference between the in mould labelling device known from EP0802032 and the in mould labelling device 1 according to the invention is described in more detail.

In the in mould labelling device 1 according to the invention the mandrel 6 (see also Fig. 2) is comprised of a hollow outer sleeve 10, an inner shaft 11 centrally located within the outer sleeve 10 and at least one elastic element 12 positioned between the inner shaft 11 and the outer sleeve 10. In this manner a self-centering mandrel 6 is obtained which ensures that when the mandrel 6 is inserted into the mould cavity 3 the mandrel 6 is correctly centered therein. As a result of the self-centering mandrel 6 in accordance with the invention a label 9 carried by the outer surface 7 of the outer sleeve 10 of the mandrel 6 can be correctly oriented within the mould cavity 3 and thus can be correctly oriented in the finished product.

With regard to Figures 2 and 3 the mandrel 6 of the in mould labelling device 1 according to the invention is schematically shown in more detail. In Figure 2 the mandrel 6 is shown in a position in which the elastic elements 12 are unstressed and in Figure 3 the mandrel 6 is shown in a position in which the elastic elements 12 are stressed, such that the inner shaft 11 is urged upwards (in the position as shown in Figure 3) towards the outer sleeve 10. The outer sleeve 10 of the mandrel 6 according to the invention comprises at least one first abutment 15 protruding radially inwards from an inner surface of the outer sleeve 10, each of the first abutments 15 having a free end 15A.

The inner shaft 11 is likewise provided with at least one second abutment 16, each protruding radially outwards from an outer surface of the inner shaft 11 and each having a free end 16A. Each first abutment 15 is arranged to protrude towards a corresponding second abutment 16 and such that the free end 15A of the first abutment 15 and the free end 16A of the second abutment 16 are positioned at a mutual distance in the unstressed position of the elastic element 12 ( as shown in Figure 2) and such that the free end 15A of the first abutment 15 and the free end 16A of the corresponding second abutment 16 are in contact with each other in the stressed position of the elastic element 12 as shown in Figure 3. When the free end 15A of the first abutment 15 and the free end 16A of the second abutment 16 are in contact with each other in the stressed position of the elastic element 12 as shown in Figure 3 a label 9 can be positioned on the outer surface 7 of the outer sleeve 10 correctly oriented by label transferring means 13 known per se, since in this contact position of the first and second abutments 15, 16 the relative orientation of the first and second abutments 15, 16 and thus the relative position of the outer sleeve 10 and the inner shaft 11 are fixed. The free ends 15A, 16A of the first and second abutments 15, 16 preferably have mating surfaces such as e.g. conical surfaces.

As also indicated in Figures 2 and 3 a head end 10A of the outer sleeve 10 is provided with at least three mutually spaced third abutments 14 each having a free end 14A and each projecting axially from the head end 10A of the outer sleeve 10. The third abutments 14 are arranged such that the free ends 14A of the third abutments 14 contact the bottom 3A of the mould cavity 3A when the mandrel 6 is fully inserted into the mould cavity 3, thereby the axial position of the mandrel 6 inside the mould cavity 3 is correctly defined, resulting a correct positioning of a label 9 in a finished product.

## Claims

1. An in mould labelling device comprising a first mould half (2) having a mould cavity (3) and a second mould half (5), the first mould half (2) and the second mould half (5) being movable towards each other to an inserted position in which the second mould half (5) is inserted into the mould cavity (3) and away from each other to an opened position in which the second mould half (5) is positioned outside the mould cavity (3), the first mould half (2) being connected to an injection nozzle (4) of the in mould labelling device, the in mould labelling device further comprising a mandrel (6) configured to hold a label (9), the mandrel (6) having an outer surface (7) with a shape corresponding to a shape of an inner surface (8) of the mould cavity (3), the mandrel (6) being arranged to be removably inserted into the mould cavity (3), wherein the mandrel (6) comprises a hollow outer sleeve (10), an inner shaft (11) centrally located within the outer sleeve (10) and an elastic element (12) positioned between the inner shaft (11) and the outer sleeve (10),
**characterized in that**
the outer sleeve (10) comprises a first abutment (15) protruding radially inwards from an inner surface (8) of the outer sleeve (10), the first abutment (15) having a free end (15A), wherein the inner shaft (11) comprises a second abutment (16) protruding radially outwards from an outer surface (7) of the inner shaft (11), the second abutment (16) having a free end (16A), the first abutment (15) being arranged to protrude towards the second abutment (16) and such that the free end (15A) of the first abutment (15) and the free end (16A) of the second abutment (16) are positioned at a mutual distance in an unstressed position of the elastic element (12) and such that the free end (15A) of the first abutment (15) and the free end (16A) of the second abutment (16) are in contact with each other in a stressed position of the elastic element (12).

2. The in mould labelling device according to claim 1, wherein the mould cavity (3A, 3) is provided with a bottom (3A), wherein a head end (10A) of the outer sleeve (10) is provided with at least three mutually spaced third abutments (14) each having a free end (14A) and each projecting axially from the head end (10A) of the outer sleeve (10), and wherein the third abutments (14) are arranged such that the free ends (14A) of the third abutments (14) contact the bottom (3A) of the mould cavity (3) when the mandrel (6) is fully inserted into the mould cavity (3).

## Patentansprüche

1. Vorrichtung zum Etikettieren in einer Form, die eine erste Formhälfte (2) mit einem Formhohlraum (3) und eine zweite Formhälfte (5) umfasst, wobei die erste Formhälfte (2) und die zweite Formhälfte (5) aufeinander zu in eine eingeführte Position, in der die zweite Formhälfte (5) in den Formhohlraum (3) eingeführt ist, und voneinander weg in eine geöffnete Position, in der die zweite Formhälfte (5) außerhalb des Formhohlraums (3) positioniert ist, bewegbar sind, und die erste Formhälfte (2) mit einer Einspritzdüse (4) der Vorrichtung zum Etikettieren in einer Form verbunden ist, wobei die Vorrichtung zum Etikettieren in einer Form ferner einen Dorn (6) umfasst, der zum Halten eines Etiketts (9) angeordnet ist, wobei der Dorn (6) eine Außenfläche (7) mit einer Form aufweist, die einer Form einer Innenfläche (8) des Formhohlraums (3) entspricht, wobei der Dorn (6) so angeordnet ist, dass er herausnehmbar in den Formhohlraum (3) eingesetzt werden kann, wobei der Dorn (6) eine hohle Außenhülse (10), einen inneren Schaft (11), der zentral innerhalb der Außenhülse (10) angeordnet ist, und ein zwischen dem inneren Schaft (11) und der Außenhülse (10) angeordnetes elastisches Element (12) umfasst,
**dadurch gekennzeichnet, dass**
die Außenhülse (10) ein erstes Widerlager (15) umfasst, das von einer Innenfläche (8) der Außenhülse (10) radial nach innen vorsteht, wobei das erste Widerlager (15) ein freies Ende (15A) aufweist, wobei der innere Schaft (11) ein zweites Widerlager (16) umfasst, das von einer Außenfläche (7) des inneren Schaftes (11) radial nach außen vorsteht, wobei das zweite Widerlager (16) ein freies Ende (16A) aufweist, wobei das erste Widerlager (15) so angeordnet ist, dass es in Richtung des zweiten Widerlagers (16) vorsteht und so dass das freie Ende (15A) des ersten Widerlagers (15) und das freie Ende (16A) des zweiten Widerlagers (16) in einer unbelasteten Position des elastischen Elements (12) in einem gegenseitigen Abstand positioniert sind und so dass das freie Ende (15A) des ersten Widerlagers (15) und das freie Ende (16A) des zweiten Widerlagers (16) in einer belasteten Position des elastischen Elements (12) in Kontakt miteinander sind.

2. Vorrichtung zum Etikettieren in einer Form nach Anspruch 1, wobei der Formhohlraum (3A, 3) mit einem Boden (3A) versehen ist, wobei ein Kopfende (10A) der Außenhülse (10) mit mindestens drei voneinander beabstandeten dritten Widerlagern (14) versehen ist, die jeweils ein freies Ende (14A) aufweisen und jeweils axial von dem Kopfende (10A) der Außenhülse (10) vorstehen, und wobei die dritten Widerlager (14) so angeordnet sind, dass die freien Enden (14A) der dritten Widerlager (14) den Boden (3A) des Formhohlraums (3) berühren, wenn der Dorn (6) vollständig in den Formhohlraum (3) eingeführt ist.

## Revendications

1. Dispositif d'étiquetage dans un moule comprenant une première moitié de moule (2) ayant une cavité de moule (3) et une deuxième moitié de moule (5), la première moitié de moule (2) et la deuxième moitié de moule (5) étant mobiles l'une vers l'autre jusqu'à une position insérée dans laquelle la deuxième moitié de moule (5) est insérée dans la cavité de moule (3) et à l'opposé l'une de l'autre jusqu'à une position ouverte dans laquelle la deuxième moitié de moule (5) est positionnée à l'extérieur de la cavité de moule (3), la première moitié de moule (2) étant raccordée à une buse d'injection (4) du dispositif d'étiquetage dans un moule, le dispositif d'étiquetage dans un moule comprenant en outre un mandrin (6) configuré afin de maintenir une étiquette (9), le mandrin (6) ayant une surface externe (7) avec une forme correspondant à une forme d'une surface interne (8) de la cavité de moule (3), le mandrin (6) étant agencé pour être inséré, de manière amovible, dans la cavité de moule (3), dans lequel le mandrin (6) comprend un manchon externe creux (10), un arbre interne (11) positionné, de manière centrale, dans le manchon externe (10) et un élément élastique (12) positionné entre l'arbre interne (11) et le manchon externe (10), **caractérisé en ce que** :
le manchon externe (10) comprend une première butée (15) faisant radialement saillie vers l'intérieur à partir d'une surface interne (8) du manchon externe (10), la première butée (15) ayant une extrémité libre (15A), dans lequel l'arbre interne (11) comprend une deuxième butée (16) faisant radialement saillie vers l'extérieur à partir d'une surface externe (7) de l'arbre interne (11), la deuxième butée (16) ayant une extrémité libre (16A), la première butée (15) étant agencée pour faire saillie vers la deuxième butée (16) et de sorte que l'extrémité libre (15A) de la première butée (15) et l'extrémité libre (16A) de la deuxième butée (16) sont positionnées à une distance mutuelle dans une position sans contrainte de l'élément élastique (12) et de sorte que l'extrémité libre (15A) de la première butée (15) et l'extrémité libre (16A) de la deuxième butée (16) sont en contact entre elles dans une position contrainte de l'élément élastique (12).

2. Dispositif d'étiquetage dans un moule selon la revendication 1, dans lequel la cavité de moule (3A, 3) est prévue avec un fond (3A), dans lequel une extrémité de tête (10A) du manchon externe (10) est prévue avec au moins trois troisièmes butées (14) mutuellement espacées, chacune ayant une extrémité libre (14A) et faisant chacune axialement saillie de l'extrémité de tête (10A) du manchon externe (10), et dans lequel les troisièmes butées (14) sont agencées de sorte que les extrémités libres (14A) des troisièmes butées (14) viennent en contact avec le fond (3A) de la cavité de moule (3), lorsque le mandrin (6) est complètement inséré dans la cavité de moule (3).
